# EUROPEAN PATENT APPLICATION

(11) **EP 1 974 800 A1**
(43) Date of publication of application: **01.10.2008**
(21) Application number: 06834421.7
(22) Date of filing: 11.12.2006
(51) Int. Cl.: B01D 63/02, B01D 63/00, B01D 63/04

(54) **HOLLOW-FIBER MEMBRANE MODULE**

(30) Priority: 19.01.2006 JP 2006010773
(71) Applicant: TORAY INDUSTRIES, INC., Tokyo 103-8666 (JP)
(72) Inventor: TANAKA, Yuji, Otsu-shi, Shiga 5200842 (JP); OKA, Naoki, Otsu-shi, Shiga 5200842 (JP)
(74) Representative: Prüfer & Partner GbR European Patent Attorneys
(86) International application number: PCT/JP2006/324666
(87) International publication number: WO 2007/083460

(57) **Abstract**

A hollow-fiber membrane module which comprises: a cylindrical vessel having openings at the upper and lower ends; hollow-fiber membrane bundles each comprising many hollow-fiber membranes and extending upward/downward in the cylindrical vessel; a hollow-fiber fixing member which is disposed at an upper-end part of the hollow-fiber membranes and fixes the hollow-fiber membranes so as to keep the hollow of each hollow-fiber membrane open; and a hollow-fiber membrane closing member which is disposed at a lower-end part of the hollow-fiber membranes and closes the hollow of each hollow-fiber membrane, wherein the hollow-fiber membrane fixing member is fixed to the cylindrical vessel in such a state that the fixing member closes the upper-end opening of the cylindrical vessel. In the hollow-fiber membrane module, at least part of the peripheral wall of the cylindrical vessel comprises a porous member, and the peripheral wall in a lower part of the cylindrical vessel has an average rate of hole area of 25% or lower.

## Description

### Technical field

The present invention relates to a hollow fiber membrane module to be immersed in a water treatment tank containing raw water, for the filtration treatment of the raw water, namely, an immersion type hollow fiber membrane module. More specifically, it relates to an immersion type hollow fiber membrane module that allows the filtration capability of hollow fiber membranes to be maintained for a long period of time and allows the hollow fiber membranes to be air-scrubbed with a less air flow rate, hence can reduce the running cost.

### Background art

In general, when an immersion type hollow fiber membrane module is used, it is disposed in a water treatment tank so that the raw water containing suspended matter in the water treatment tank can be sucked and filtered through hollow fiber membranes for obtaining a filtrate.

After the hollow fiber membrane module has undergone a filtration process for a certain period of time, in general, it is subjected to an air scrubbing process in which compressed air is fed into the hollow fiber membrane module from below the hollow fiber membrane module, for shaking the hollow fiber membranes, to wash away the suspended matter, etc. deposited on the surfaces of the hollow fiber membranes. It is preferred that the suspended matter removed from the surfaces of the hollow fiber membranes by air scrubbing is quickly discharged outside the hollow fiber membrane module, and for example, as disclosed in Patent Document 1, it is convenient that the hollow fiber membranes are exposed at the top and bottom ends of the hollow fiber membrane module, where the suspended matter is likely to be deposited.

Further as disclosed in Patent Document 2, it is convenient that hollow fiber membranes as a whole are covered with a water permeable cylindrical case, for such reasons that the raw water can be supplied from the entire circumferential surface of the cylindrical case and that the suspended matter can be let out from the entire circumferential surface of the cylindrical case at the time of air scrubbing, to enhance the suspended matter discharge capability.

However, the structure of the hollow fiber membrane module described in Patent Document 1 has such a problem that at the time of air scrubbing, the compressed air supplied from below the hollow fiber membrane module is likely to flow out from the hollow fiber membrane module at the portion where the bottom ends of the hollow fiber membranes are exposed, not allowing the hollow fiber membranes to be shaken sufficiently at their upper portions, hence not allowing the suspended matter on the surfaces of the hollow fiber membranes to be sufficiently air-scrubbed.

Furthermore similarly, the structure of the hollow fiber membrane module described in Patent Document 2 also has such a problem that the compressed air supplied from below the hollow fiber membrane module is likely to flow outside the hollow fiber membrane module from the lower portion of the water permeable cylindrical case, not allowing the hollow fiber membranes in the upper portion to be sufficiently shaken. As a result, the amount of compressed air supplied for shaking the hollow fiber membranes also in the upper portion must be increased to raise the running cost.

As described above, it is difficult that the structures of the conventional hollow fiber membrane modules achieve both a higher capability of discharging suspended matter and a higher capability of air-scrubbing the hollow fiber membranes.
Patent Document 1: JP 2002-346344 A
Patent Document 2: JP 2005-230813 A

### Disclosure of the invention

### Problem to be solved by the invention

The object of the invention is to provide a hollow fiber membrane module that allows the suspended matter to be easily removed from the outer surfaces of the hollow fiber membranes when the hollow fiber membranes are scrubbed with air and allows the removed suspended matter to be easily discharged outside the hollow fiber membrane module.

### Means for solving the problem

A hollow fiber membrane module of the invention to achieve the aforementioned object is as described below.

A hollow fiber membrane module comprises a cylindrical case having openings at the top end and the bottom end thereof, a hollow fiber membrane bundle comprising numerous hollow fiber membranes positioned in the vertical direction in the cylindrical case, a hollow fiber membrane fixing member (an adhered portion A) installed at the top end portions of the hollow fiber membranes for fixing the hollow fiber membranes in such a state that the hollow portions of the hollow fiber membranes are kept open, and a hollow fiber membrane plugging member (an adhered portion B) installed at the bottom end portions of the hollow fiber membranes for plugging the hollow portions of the hollow fiber membranes, wherein the hollow fiber membrane fixing member (the adhered portion A) is fixed to the cylindrical case in such a state that the hollow fiber membrane fixing member closes the opening at the top end of the cylindrical case, and wherein the circumferential wall of the cylindrical case is at least partially formed of a perforated member and that the average hole area rate of the circumferential wall in the lower portion of the cylindrical case is 25% or less.

In the hollow fiber membrane module of the invention, it is preferred that the average hole area rate of the circumferential wall in the upper portion of the cylindrical case is larger than the average hole area rate of the circumferential wall in the lower portion.

In the hollow fiber membrane module of the invention, it is preferred that the numerous hollow fiber membranes are divided into a plurality of small bundles each of which comprises a plurality of the hollow fiber membranes, and that the hollow fiber membrane plugging member (the adhered portion B) comprises small bundle fixing members independent from each other with clearances between the respective small bundle fixing members, for plugging the hollow portions of the respective hollow fiber membranes and for bundling and integrally fixing the respective hollow fiber membranes as each of the respective small bundles.

In the hollow fiber membrane module of the invention, it is preferred that the number of the small bundles is 3 to 50 and that the number of hollow fiber membranes forming each of the small bundles is 50 to 2000.

In the hollow fiber membrane module of the invention, it is preferred that the cylindrical case has a diameter of 50 to 400 mm and a length of 500 to 3000 mm.

In the hollow fiber membrane module of the invention, it is preferred that each of the small bundle fixing members has a turbulence generation member on a surface thereof.

In the hollow fiber membrane module of the invention, it is preferred that small bundle partition members for compartmentalizing the respective small bundle fixing members are provided between the respective small bundle fixing members.

In the hollow fiber membrane module of the invention, it is preferred that at least one hanging string is provided along the hollow fiber membranes forming each of the small bundles; one end of the hanging string is fixed to the hollow fiber membrane fixing member while the other end is fixed to the small bundle fixing member; in each of the small bundles, the length of the hanging string in a filtration region of the hollow fiber membranes is shorter than the shortest one of the lengths of the plurality of the hollow fiber membranes in the filtration region.

### Effects of the invention

According to the hollow fiber membrane module of the invention, a compressed air supplied for air scrubbing from below the hollow fiber membrane module is effectively used for air-scrubbing the hollow fiber membranes and further, the suspended matter is efficiently discharged from both the top and bottom ends of the hollow fiber membrane module. Therefore, the filtration capability of the hollow fiber membranes does not decline for a long period of time, and the hollow fiber membrane module can be used for a long period of time.

### Brief description of the drawings

Fig. 1 is a schematic vertical sectional view showing an example of the hollow fiber membrane module of the invention.
Fig. 2 is an expansion plan showing the circumferential wall of the cylindrical case of the hollow fiber membrane module shown in Fig. 1.
Fig. 3 is an enlarged view showing a part of the circumferential wall shown in Fig. 2.
Fig. 4 is a schematic vertical sectional view showing another example of the hollow fiber membrane module of the invention.
Fig. 5 is a schematic vertical sectional view showing a further example of the hollow fiber membrane module of the invention.
Fig. 6 is an expansion plan showing the circumferential wall of the cylindrical case of the hollow fiber membrane module shown in Fig. 5.
Fig. 7 is a schematic vertical sectional view showing a still further example of the hollow fiber membrane module of the invention.
Fig. 8 is a perspective view showing an example of a small bundle fixing member in the hollow fiber membrane module shown in Fig. 1.
Fig. 9 is a perspective view showing another example of the small bundle fixing member shown in Fig. 8.
Fig. 10 is a perspective view showing a further example of the small bundle fixing member shown in Fig. 8.
Fig. 11 is a schematic vertical sectional view showing the lower portion of a further example of the hollow fiber membrane module of the invention.
Fig. 12 is a plan view showing small bundle partition members in the hollow fiber membrane module shown in Fig. 11.
Fig. 13 is a schematic vertical sectional view showing a still further example of the hollow fiber membrane module of the invention.
Fig. 14 is a schematic vertical sectional view of a conventional hollow fiber membrane module.

### Meanings of symbols

1: hollow fiber membrane module
2: hollow fiber membrane
2a: hollow portion of hollow fiber membrane
3: cylindrical case
3a: opening at the top of cylindrical case
3b: opening at the bottom of cylindrical case
3c: perforated member
4a: hollow fiber membrane fixing member (adhered portion A)
4aF1: face where the hollow portions of hollow fiber membranes are open
4b: hollow fiber membrane plugging member (adhered portion B)
4bc: clearance between small bundle fixing members
4bi: small bundle fixing member
4bj: small bundle fixing member
4bk: small bundle fixing member
4bm: container
4bt: turbulence generating member
4bs: small bundle partition member
5: water collection cap
6: filtrate outlet
7: air introducing cylinder
8: small bundle
9: open portion
10: wire portion
17: bottom cap
17a: air inflow port
17b: air diffusion plate
41: hollow fiber membrane module
43: cylindrical case
49: perforated portion
51: hollow fiber membrane module
53: cylindrical case
59: perforated portion
71: hollow fiber membrane module
73: cylindrical case
77: bottom cap
77a: air introducing port
111: hollow fiber membrane module
131: hollow fiber membrane module
132: hollow fiber membrane
132b: hanging string
134a: hollow fiber membrane fixing member
134bi: small bundle fixing member
141: hollow fiber membrane module
142: hollow fiber membrane
143: cylindrical case
143a: opening at the top of cylindrical case
143b: opening at the bottom of cylindrical case
144a: hollow fiber membrane fixing member
144b: hollow fiber membrane plugging member
144bi: small bundle fixing member
144bc: clearance between small bundle fixing members
145: water collection cap
146: filtrate outlet
147: air introducing cylinder
148: small bundle
149: perforated portion
A: upper portion of cylindrical case
B: lower portion of cylindrical case

### The best modes for carrying out the invention

The hollow fiber membrane module of the invention as used for producing clean water is explained below in reference to drawings.

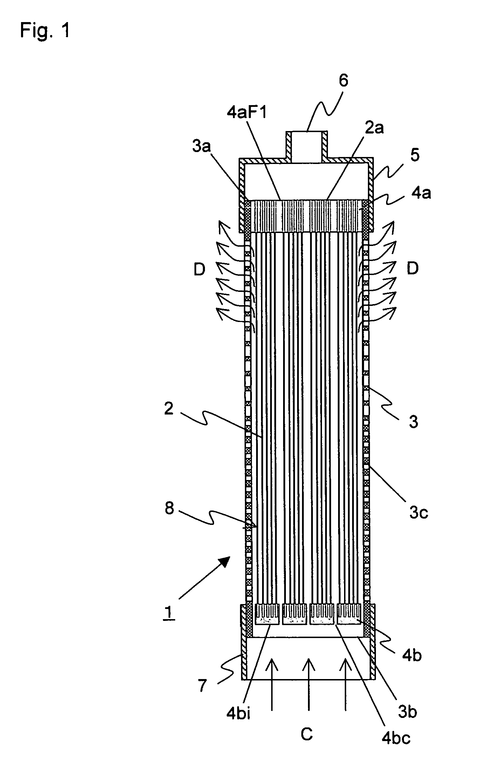

Fig. 1 is a schematic vertical sectional view showing an example of the hollow fiber membrane module of the invention. In Fig. 1, the hollow fiber membrane module 1 of the invention comprises a cylindrical case 3 having an opening 3a at the top end and an opening 3b at the bottom end thereof, a hollow fiber membrane bundle comprising numerous hollow fiber membranes 2 positioned in the vertical direction in the cylindrical case 3, a hollow fiber membrane fixing member (an adhered portion A) 4a installed at the top end portions of the hollow fiber membranes 2 for fixing the hollow fiber membranes 2 in such a state that the hollow portions 2a of the hollow fiber membranes 2 are kept open, and a hollow fiber membrane plugging member (an adhered portion B) 4b installed at the bottom end portions of the hollow fiber membranes 2 for plugging the hollow portions 2a of the hollow fiber membranes 2, wherein the hollow fiber membrane fixing member 4a is fixed to the cylindrical case 3 in such a state as to close the opening 3a at the top end of the cylindrical case 3.

In the hollow fiber membrane module 1 of the invention, at least part of the circumferential wall of the cylindrical case 3 is a perforated member 3c, and the average hole area rate of the circumferential wall in the lower portion of the cylindrical case 3 is 25% or less.

In the hollow fiber membrane module 1 of the invention shown in Fig. 1, the numerous hollow fiber membranes 2 are divided into a plurality of small bundles 8 each of which comprises a plurality of hollow fiber membranes 2. Each small bundle fixing member 4bi is provided for each small bundle 8, and the small bundle fixing member plugs the hollow portions at the bottom end portions of the respective hollow fiber membranes 2 of each small bundle 8 and integrally bundles and fixes the hollow fiber membranes 2 of each small bundle. The respective small bundle fixing members 4bi form clearances 4bc between them and are positioned independently from each other. That is, the respective small bundle fixing members 4bi are provided independently from each other at the bottom ends of the respective small bundles 8 suspended from the hollow fiber membrane fixing member 4a, and their respective positions can be varied by the fluid (raw water or air for air scrubbing) passing through the clearances 4bc.

In the hollow fiber membrane module of the invention, it is preferred that the hollow fiber membrane plugging member for plugging the hollow portions at the bottom end portions of the hollow fiber membranes is provided as a plurality of small bundle fixing members 4bi independent from each other with clearances formed between them as shown as the hollow fiber membrane plugging members 4b of the hollow fiber membrane module 1 of Fig. 1.

However, the hollow fiber membrane plugging member can also be formed of one end plate. In the case where the hollow fiber membrane plugging member is formed of one end plate, it is preferred that the end plate is fixed to the cylindrical case 3 in such a state as to close the opening 3b at the bottom end of the cylindrical case 3 and that multiple fluid passages communicating between the inside and the outside of the cylindrical case 3 are arranged as uniformly as possible on the plane of the end plate, avoiding the portions where the bottom ends of the hollow portions of the hollow fiber membranes 2 are plugged.

Further, without using the small bundle fixing members 4bi and the end plate, a plugging material may be injected into the hollow portions at the bottom ends of the respective hollow fiber membranes or the bottom ends of the respective hollow fiber membranes may be crushed by pressurization, so that the respective hollow fiber membranes are merely suspended from the hollow fiber membrane fixing member 4a. In this case, the hollow fiber membrane plugging member is formed by the plugging of the hollow portions at the bottom ends of the respective hollow fiber membranes.

In the hollow fiber membrane module of the invention, a filtration region of the hollow fiber membranes refers to the membrane surface region where the raw water in contact with the outer surfaces of the hollow fiber membranes can be filtered through the hollow fiber membranes, to flow into the hollow portions of the hollow fiber membranes as a filtrate.

In the hollow fiber membrane module of the invention, it is preferred that the hollow fiber membrane bundle comprises hundreds to tens of thousands of hollow fiber membranes.

In the hollow fiber membrane module of the invention, in the case where the hollow fiber membrane bundle is divided into a plurality of small bundles, it is preferred that the number of the hollow fiber membranes forming each small bundle is tens to thousands.

A shape of the respective small bundle fixing members (adhered portion B) can be arbitrary, including a circular cylinder, sphere, cone, pyramid, etc. The small bundle fixing members (adhered portion B) 4bi of Fig. 1 are circular cylinders.

The number of small bundles obtained by dividing the numerous hollow fiber membranes of the hollow fiber membrane bundle and the number of hollow fiber membranes of each small bundle can be selected to obtain the intended effects in reference to the diameter and length of the cylindrical case, the diameter of each hollow fiber membrane, etc.

For example, in the case of a hollow fiber membrane module comprising a cylindrical case 3 having a diameter of about 50 to about 400 mm and a length of about 500 to about 3000 mm and hollow fiber membranes 2, each having a diameter of about 0.5 to about 2 mm, it is preferred that the number of the small bundles 8 is in the range of about 3 to about 1000. A more preferred range is 3 to 50. If the number of the small bundles 8 is too small, the suspended matter discharge capability becomes too low. If the number of the small bundles 8 is larger on the contrary, the production of the hollow fiber membrane module 1 becomes more complicated though the suspended matter discharge capability becomes higher.

It is preferred that the number of hollow fiber membranes 2 forming one small bundle 8 is 50 to 2000. If the number of hollow fiber membranes 2 forming one small bundle 8 is small, the number of small bundles 8 increases, and the production of the hollow fiber membrane module 1 becomes complicated as described before. If the number of hollow fiber membranes 2 forming one small bundle 8 is too large on the contrary, the suspended matter is liable to be deposited in the clearances formed among the hollow fiber membranes 2.

The material of the hollow fiber membranes in the hollow fiber membrane module of the invention is not especially limited. Examples of the material of the hollow fiber membranes include a polysulfone, polyethersulfone, polyacrylonitrile, polyimide, polyetherimide, polyamide, polyetherketone, polyetheretherketone, polyethylene, polypropylene, ethylene-vinyl alcohol copolymer, cellulose, cellulose acetate, polyvinylidene fluoride, ethylene-tetrafluoroethylene copolymer, polytetrafluoroethylene, etc. and their composite materials.

It is preferred that the outer diameter of the hollow fiber membranes in the hollow fiber membrane module of the invention is 0.3 to 3 mm. If the outer diameter of hollow fiber membranes is too small, there is such a problem that the hollow fiber membranes are broken and damaged when the hollow fiber membranes are handled for producing the hollow fiber membrane module or when the hollow fiber membrane module is used for filtration or washed, etc. On the contrary, if the outer diameter is too large, the number of hollow fiber membranes that can be inserted into a cylindrical case of the same size decreases to cause such a problem that the filtration area decreases. It is preferred that the membrane thickness of hollow fiber membranes is 0.1 to 1 mm. If the membrane thickness is too small, there is such a problem that the membranes are broken by pressure, and if the membrane thickness is too large on the contrary, there are such problems as pressure loss and rise of raw material cost.

The hollow fiber membrane fixing member (adhered portion A) 4a is usually formed of a resin. If a flowable resin is made to flow into the clearances formed among the numerous hollow fiber membranes and subsequently solidified to fix the hollow fiber membranes, and the hollow fiber membranes are cut at their ends, then the hollow fiber membrane fixing member (adhered portion A) 4a is formed with the hollow portions of the respective hollow fiber membranes kept open. This forming work is generally called potting and is widely known.

The hollow fiber membrane plugging member (adhered portion B) 4b or the small bundle fixing members (adhered portion B) 4bi are usually also formed of a resin. A desired amount of a flowable resin is penetrated into the hollow portions of hollow fiber membranes, to plug the hollow portions. In the case where an end plate is used, the same resin is used to fix the hollow fiber membranes and to form the end plate. In the case where small bundles obtained by dividing the hollow fiber membrane bundle are used, the same resin is used to fix the hollow fiber membranes and to form the small bundle fixing members.

As the resin used to form the hollow fiber membrane fixing member, the hollow fiber membranes plugging member and the small bundle fixing members, an epoxy resin, urethane resin, epoxy acrylate resin, etc. can be preferably used, since they can be used for general purposes and are low in cost and small in the influence on water quality.

The hollow fiber membrane module of the invention, having a water collection cap installed at the top of the cylindrical case and an air introducing cylinder installed at the bottom, is used for filtering raw water. That is, in the hollow fiber membrane module 1, a water collection cap 5 for collecting the filtrate discharged from the openings of the hollow portions 2a of the hollow fiber membranes 2 onto the surface 4aF1 of the hollow fiber membrane fixing member 4a where the hollow portions 2a of the hollow fiber membranes 2 are opened, is attached to the cylindrical case 3. The water collection cap 5 has a filtrate outlet 6 for guiding the collected filtrate outside. Around the opening 3b at the bottom end of the cylindrical case 3, an air introducing cylinder 7 for introducing compressed air into the cylindrical case 3 for air scrubbing is installed.

The cylindrical case 3, the water collection cap 5 and the air introducing cylinder 7 are usually formed of a resin. Examples of the resin used to form these parts include polyolefin resins such as polyethylene resin, polypropylene and polybutene, fluorine resins such as polytetrafluoroethylene (PTFE), perfluoroalkoxy (PFA), tetrafluoroethylene-hexafluoropropylene (FEP), ethylene-tetrafluoroethylene (ETFE), polychlorotrifluoroethylene (PCTFE), ethylene chlorotrifluoroethylene (ECTFE) and polyvinylidene fluoride (PVDF), chlorine resins such as polyvinyl chloride and polyvinylidene chloride, polysulfone resin, polyethersulfone resin, polyallylsulfone resin, polyphenylether resin, acrylonitrile-butadiene-styrene copolymer resin (ABS), acrylonitrile-styrene copolymer resin, polyphenylene sulfide resin, polyamide resin, polycarbonate resin, polyetherketone resin, polyetheretherketone resin, etc. Any one of these resins can be used alone or two or more of them can also be used as a mixture.

The cylindrical case 3, the water collection cap 5 and the air introducing cylinder 7 can also be formed of any other material than a resin. As the material in this case, aluminum, stainless steel or the like can be preferably used. Further, a composite material such as a composite comprising a resin and a metal, glass fiber reinforced resin or carbon fiber reinforced resin can also be used. Meanwhile, the cylindrical case 3, the water collection cap 5 and the air introducing cylinder 7 can also be formed of respectively different materials.

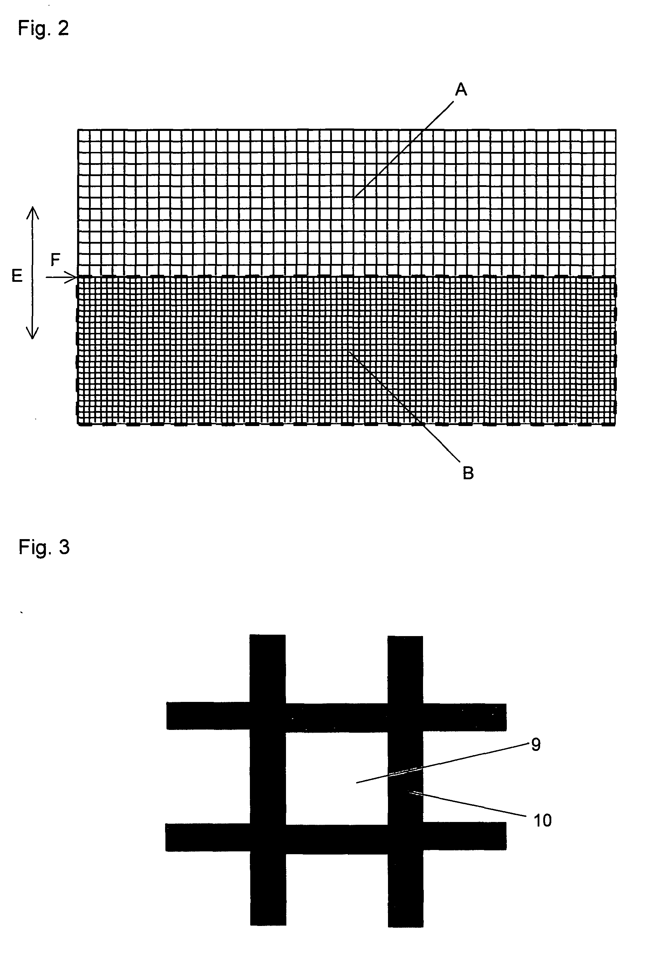

In the hollow fiber membrane module of the invention, the circumferential wall of the cylindrical case is at least partially formed of a perforated member, and the average hole area rate of the circumferential wall in the lower portion of the cylindrical case is 25% or less. An example of it is explained below in reference to Figs. 1 and 2.

Fig. 2 is an expansion plan of the circumferential wall of the cylindrical case 3 shown in Fig. 1. In Figs. 1 and 2, the circumferential wall of the cylindrical case 3 of the hollow fiber membrane module 1 of the invention is at least partially formed of a perforated member 3c having mesh perforations, and the average hole area rate of the circumferential wall in the lower portion of the cylindrical case 3 is 25% or less. The circumferential wall in the lower portion of the cylindrical case 3 refers to the circumferential wall in the portion (region B surrounded by a broken line in Fig. 2) on the side of the hollow fiber membrane plugging member 4b (small bundle fixing members 4bi) below the approximately central position (position indicated by arrow F in Fig. 2) in the longitudinal direction (direction of arrow E in Fig. 2) of the cylindrical case 3.

Fig. 3 is a partially enlarged view of the circumferential wall of the cylindrical case 3. In Fig. 3, the circumferential wall can be classified into open portions 9 and wire portions 10. If the projected area of the region B is X in the expansion plan of the circumferential wall in Fig. 2 and the sum of the projected areas of the respective open portions 9 in Fig. 3 is Y, then the average hole area rate of the circumferential wall in the lower portion (region B) can be calculated from formula Y/X x 100(%).

The circumferential wall in the upper portion of the cylindrical case 3 refers to the circumferential wall in the portion (region A of Fig. 2) on the side of the hollow fiber membrane fixing member 4a above the approximately central position (position indicated by arrow F in Fig. 2) in the longitudinal direction (direction of arrow E in Fig. 2) of the cylindrical case 3. The average hole area rate of the circumferential wall in the upper portion (region A) can also be calculated similarly from the abovementioned formula.

The distribution of the open portions (the distribution of positions and hole areas of the respective open portions 9) in the circumferential wall of the cylindrical case 3 can be a uniform distribution or a non-uniform distribution in the longitudinal direction (vertical direction) of the cylindrical case. A non-uniform distribution in the circumferential direction is not preferred, since raw water flow and air flow become non-uniform. The lower portion (region B) may also be, at least partially, like a sheet free from perforations at all.

It is preferred that the average hole area rate of the upper portion (region A) is larger than the average hole area rate of the lower portion (region B). For example, it is preferred that the average hole area rate of the upper portion (region A) is 30 to 70%, and that the difference between the upper portion (region A) and the lower portion (region B) in average hole area rate is 10% or more.

The cylindrical case having a circumferential wall having average hole area rates as described above can be prepared, for example, by arranging different perforated members respectively with predetermined average hole area rates for the upper half and the lower half. Further, the cylindrical case having the average hole area rate in the upper half kept higher than the average hole area rate in the lower half can be prepared, for example, by forming the entire circumferential wall of the cylindrical case using a perforated member having a predetermined average hole area rate, and overlaying another perforated member having the same or different average hole area rate onto the lower half.

As the perforated member installed in the circumferential wall of the cylindrical case, a sheet member having such perforations like meshes, net or punching metal can be used. For example, a perforated sheet member or cylindrical member obtained by molding a resin, a metal screen composed of metallic wires, punching metal sheet, etc. can be used. Above all, it is preferred to use a perforated molded resin member, since it is inexpensive and little affects water quality.

The raw water treatment by the hollow fiber membrane module 1 of the invention shown in Fig. 1 is explained below.

At first, the hollow fiber membrane module 1 is immersed in a water tank (not shown in the drawing) with a water depth larger than the height of the module, with the water collection cap 5 kept above. The water tank is filled with raw water containing suspended matter. If a pump or the like is used for suction from the filtrate outlet 6 of the water collection cap 5 of the hollow fiber membrane module 1, the raw water containing suspended matter in the water tank is sucked into the hollow fiber membrane module 1 through the open portions 9 in the circumferential wall of the cylindrical case 3 and through the air introducing cylinder 7, and after the raw water passes through the hollow fiber membrane bundles 2, to be filtered, the filtrate passes from the water collection cap 5 through the filtrate outlet 6 and is sent to a water collection pipe (not shown in the drawing). Concurrently with this filtration, the suspended matter in the raw water is deposited on the outer surfaces of the hollow fiber membranes 2. Further, if the suction is performed on the filtrate side, to take out the raw water from the water tank, for filtering the raw water, the water level in the water tank declines. So, as required, raw water is supplied into the water tank.

If the filtration process of a certain period of time is completed, the filtrate or compressed air is fed from the water collection cap 5 side toward the raw water side for backwashing, and compressed air is supplied from the air pipe (not shown in the drawing) installed below the hollow fiber membrane module 1 through the air introducing cylinder 7 at the bottom of the hollow fiber membrane module 1 into the hollow fiber membrane module 1, for air-scrubbing to discharge the suspended matter deposited in the hollow fiber membrane module 1 outside the hollow fiber membrane module 1.

In the backwashing, since the filtrate or compressed air flows from inside the hollow fiber membranes 2 to outside, the suspended matter deposited on the outer surfaces of the hollow fiber membranes 2 are peeled or become likely to be peeled from the outer surfaces of the hollow fiber membranes 2. Further in the subsequent air scrubbing, fine suspended matter is discharged through the open portions 9 in the circumferential wall of the cylindrical case 3 and through the air introducing cylinder 7 to outside the hollow fiber membrane module 1. The suspended matter is kept suspended in the water tank, and after lapse of a certain period of time, the suspended matter settles toward the bottom of the water tank.

In this case, since the small bundle fixing members (adhered portion B) 4bi in the hollow fiber membrane module 1 are not fixed to the cylindrical case 3, air scrubbing causes the hollow fiber membranes 2 to be shaken together with the small bundle fixing members (adhered portion B) 4bi. The shaking causes the suspended matter deposited on the outer surfaces of the hollow fiber membranes 2 to be peeled. Further, also when the suspended matter is discharged from below the hollow fiber membrane module 1, the water containing suspended matter is discharged through the clearances 4bc among the freely moving the plurality of small bundle fixing members (adhered portion B) 4bi. Therefore, the suspended matter little remains in the hollow fiber membrane module 1, to prevent the filtration capability from declining. Meanwhile, when the raw water in the water tank is discharged periodically, the suspended matter deposited on the bottom of the water tank is also discharged outside the water tank. These processes are repeated to continue the filtration treatment of raw water for a long period of time.

Next, the flow of air at the time of air scrubbing in a conventional hollow fiber membrane module is explained below in comparison with that in the hollow fiber membrane module of the invention.

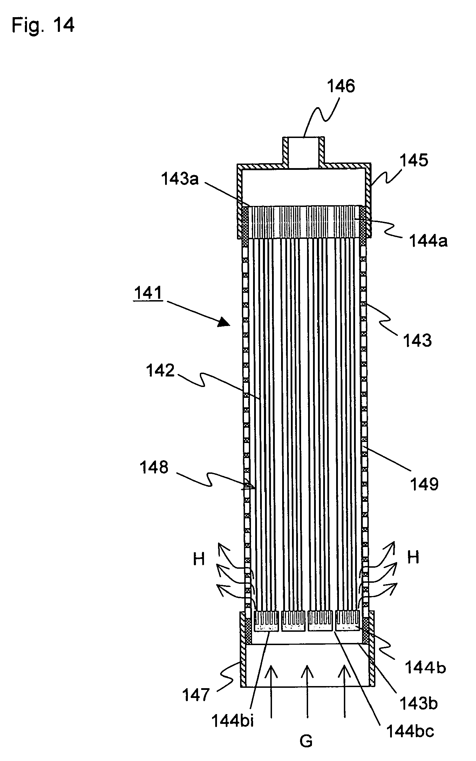

Fig. 14 is a schematic vertical sectional view showing a conventional hollow fiber membrane module. In Fig. 14, a hollow fiber membrane module 141 comprises a cylindrical case 143 having perforated portions 149 formed in the circumferential wall, and hollow fiber membrane bundles comprising numerous hollow fiber membranes 142 accommodated in the cylindrical case 143. The cylindrical case 143 has openings 143a and 143b at the top and bottom ends. The top ends of the hollow fiber membranes 142 are fixed by a hollow fiber membrane fixing member 144a, with the hollow portions of the hollow fiber membranes 142 kept open, and the hollow fiber membrane fixing member 144a is liquid-tightly fixed to the top end of the cylindrical case 143.

The bottom ends of the hollow fiber membranes 142 are divided into a plurality of small bundles 148. Each small bundle 148 comprises a plurality of hollow fiber membranes 142. Each of small bundle fixing members 144bi fixes the respective hollow fiber membranes 142 of each small bundle 148 and plugs the end faces of the respective hollow fiber membranes 142. The small bundle fixing members 144bi are not fixed to the cylindrical case 143. The membrane face region between the bottom face of the hollow fiber membrane fixing member 144a of the hollow fiber membranes 142 and the top face of the small bundle fixing members 144bi is the filtration region. The circumferential wall of the cylindrical case 143 has the perforated portions 149 uniformly distributed on the entire surface. The average hole area rate of the circumferential wall of the cylindrical case 143 is about 30%.

In Fig. 14, the compressed air supplied from an air pipe (not shown in the drawing) installed below the hollow fiber membrane module 141 is introduced in the direction of arrows G through the air introducing cylinder 147 into the hollow fiber membrane module 141. Most of the air introduced into the hollow fiber membrane module 141 is discharged outside the hollow fiber membrane module 141 as indicated by arrows H from the perforated portions 149 in the circumferential wall of the cylindrical case 143 in the lower portion of the hollow fiber membrane modules 141.

Therefore, the hollow fiber membranes 142 in the portion corresponding to the lower portion of the hollow fiber membrane module 141 are shaken by the compressed air, and the suspended matter on the outer surfaces of the hollow fiber membranes 142 are likely to be peeled, but since the hollow fiber membranes 142 in the portion corresponding to the upper portion of the hollow fiber membrane module 141 are only slightly supplied with the compressed air, they are not sufficiently shaken. If the supplied amount of compressed air is increased, the hollow fiber membranes 142 in the portion corresponding to the upper portion can also be shaken so much as to allow the suspended matter on the outer surfaces to be peeled. However, this method increases the running cost of water treatment.

On the other hand, in Fig. 1, since the hole area rate of the circumferential wall of the cylindrical case 3 in the lower portion of the hollow fiber membrane module 1 is as small as 25% or less, the compressed air introduced in the direction of arrows C through the air introducing cylinder 7 into the hollow fiber membrane module 1 as shown in Fig. 1 is little discharged from the hole portions 9 (Fig. 3) of the circumferential wall of the cylindrical case 3 in the lower portion of the hollow fiber membrane module 1, and the hollow fiber membranes 2 can be shaken sufficiently over the entire length. The air reaches the top of the hollow fiber membrane module 1 and is discharged from the upper open portions 9 (Fig. 3) as indicated by arrows D.

For this reason, the hollow fiber membrane module 1 shown in Fig. 1 can use compressed air more effectively than the hollow fiber membrane module 141 shown in Fig. 14, to reduce the running cost. Further, the suspended matter is little discharged from the open portions 9 (Fig. 3) of the cylindrical case 3 at the lower portion of the hollow fiber membrane module 1 like compressed air. Meanwhile, as described before, since the suspended matter is discharged below the hollow fiber membrane module 1 from the air introducing cylinder 7 through the clearances 4bc among the freely moving multiple small bundle fixing members 4bi, no problem arises.

Furthermore, in the hollow fiber membrane module 1 shown in Fig. 1, it is preferred that the average hole area rate of the circumferential wall of the cylindrical case 3 in the upper portion (region A) is larger than the average hole area rate of the circumferential wall in the lower portion (region B) In this mode, the suspended matter peeled from the outer surfaces of the hollow fiber membranes 2 at the time of air scrubbing is discharged outside the hollow fiber membrane module 1 from the region where the average hole area rate of the circumferential wall of the cylindrical case 3 in the upper portion of the hollow fiber membrane module 1 is large, together with the water flow from below to above in the hollow fiber membrane module 1 caused by compressed air.

In another embodiment of the hollow fiber membrane module of the invention, the projected areas of the open portions in the circumferential wall of the cylindrical case in the module may become larger, continuously or stepwise, from the bottom toward the top in the cylindrical case (not shown in the drawing).

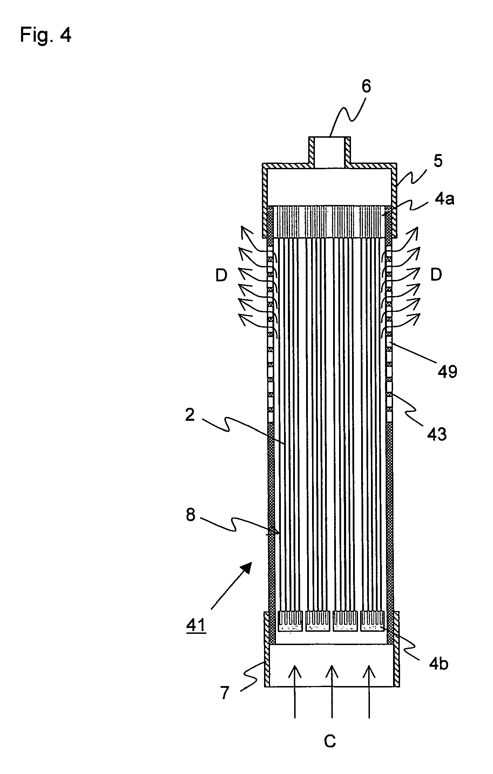

Fig. 4 is a schematic vertical sectional view showing a further embodiment of the hollow fiber membrane module of the invention. The difference between the module 41 of Fig. 4 and the module 1 of Fig. 1 is that the cylindrical case 43 of the module 41 of Fig. 4 does not have the perforated portions 49 at all in the lower portion (region B) of the cylindrical case 43 (average hole area rate is 0%). Since the hollow fiber membrane module 41 of Fig. 4 is identical with the hollow fiber membrane module 1 of Fig. 1 in the other structure, identical parts are given the same symbols.

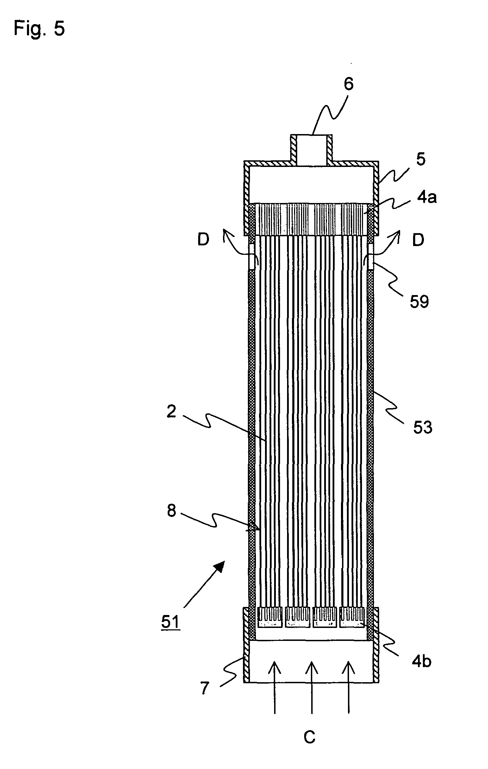

Fig. 5 is a schematic vertical sectional view showing a further other embodiment of the hollow fiber membrane module of the invention. The difference between the module 51 of Fig. 5 and the module 41 of Fig. 4 is that the cylindrical case 53 of the module 51 of Fig. 5 has perforated portions 59 only partially in the upper portion (region A) of the cylindrical case 53. Since the hollow fiber membrane module 51 of Fig. 5 is identical with the hollow fiber membrane module 1 of Fig. 1 in the other structure, identical parts are given the same symbols.

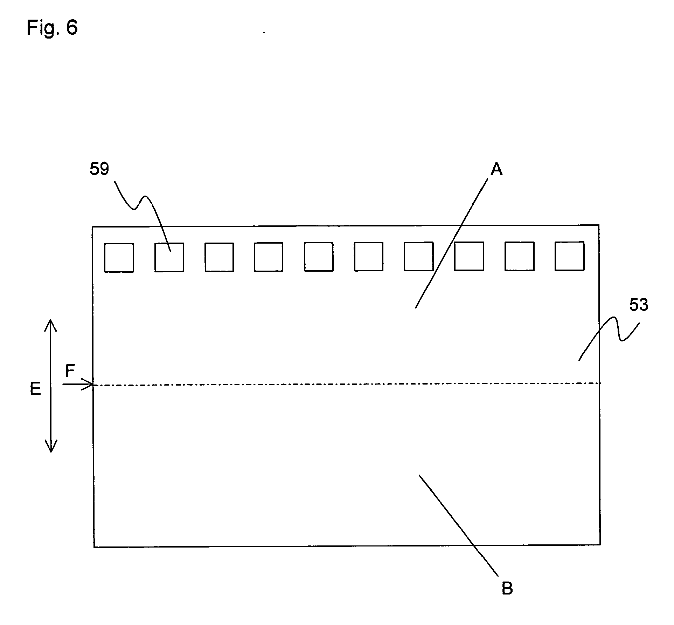

The expansion plan of the circumferential wall of the cylindrical case 53 of the module 51 shown in Fig. 5 is shown in Fig. 6. In this case, since the compressed air supplied from below the module 51 can be discharged only from the perforated portions 59 formed only partially in the upper portion of the circumferential wall of the cylindrical case 53, the hollow fiber membranes 2 can be efficiently shaken by compressed air. On the other hand, the suspended matter that can be discharged through the circumferential wall of the cylindrical case 53 decreases.

The open portions 9 shown in Fig. 3 and the perforated portions 59 shown in Fig. 6 are square in form, but the form can also be a polygon such as triangle, pentagon or hexagon, or circle, ellipse, star, etc. These forms can also be used together.

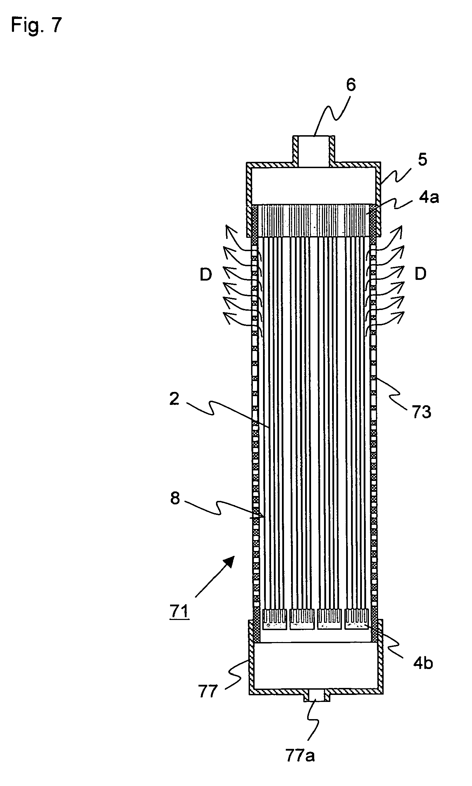

Fig. 7 is a schematic vertical sectional view showing a still further embodiment of the hollow fiber membrane module of the invention. The difference between the module 71 of Fig. 7 and the module 1 of Fig. 1 is that a bottom cap 77 having an air introducing port 77a is installed instead of the air introducing cylinder 7 of Fig. 1 at the bottom end of the cylindrical case 73 of the module 71 of Fig. 7. Since the module 71 of Fig. 7 is identical with the hollow fiber membrane module 1 of Fig. 1 in the other structure, identical parts are given the same symbols.

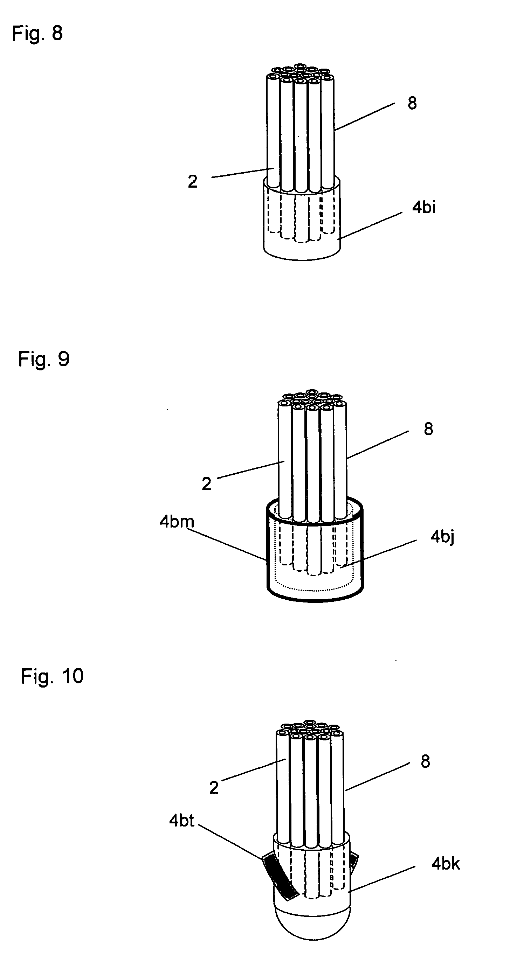

Fig. 8 is an expanded perspective view showing a small bundle fixing member 4bi of the hollow fiber membrane module 1 of the invention shown in Fig. 1. In Fig. 8, the small bundle fixing member 4bi is a circular cylinder formed of a resin. In the small bundle fixing member 4bi, a small bundle 8 comprising a plurality of hollow fiber membranes 2 is fixed by a resin, and the hollow portions at the bottom ends of the respective hollow fiber membranes are plugged by the resin penetrating into the hollow portions.

Fig. 9 is a perspective view showing another mode of the small bundle fixing member 4bi shown in Fig. 8. In Fig. 9, the small bundle fixing member 4bj is a circular cylinder. The small bundle fixing member 4bj comprises a container 4bm and a resin packed in it and the resin bundles a plurality of hollow fiber membranes 2 forming the small bundle 8 and also plugs the hollow portions at their ends. The small bundle fixing member 4bj is formed by disposing the ends of multiple hollow fiber membranes 2 in the container 4bm, injecting a resin, solidifying the injected resin for fixing the hollow fiber membranes 2 and plugging the hollow portions at their ends. If this small bundle fixing member forming method is used, the ends of hollow fiber membranes can be efficiently plugged, and the weight effect of the container 4bm can be given to the hollow fiber membranes 2 suspended in the module. As the material of the container 4bm, for example, a resin or a metal can be used. If a metal is used, the container 4bm can provide a larger weight effect. As the metal used to form the container 4bm, stainless steel (SUS) is preferred.

To prevent that the small bundle fixing members reduces the hollow fiber membrane packing rate in the cylindrical case, it is also preferred that the positions of the small bundle fixing members adjacent to each other are shifted in the axial direction (vertical direction) of the module.

Each of the small bundle fixing members can also be partially connected with adjacent small bundle fixing members. The connection can be achieved using, for example, rod-like articles or string-like articles. Since this connection makes the small bundle fixing members connected with each other, it does not happen that small bundle fixing members in a specific place only are shaken, and the forces of vibration and shaking can be propagated to other small bundle fixing members. At the same time, the positions of the respective bundles can be gently regulated. This enhances the dispersibility of raw water and air. The enhanced dispersibility further enhances the effect of preventing the occurrences of contamination spots in the hollow fiber membranes and the effect of preventing the intertwining between the respective small bundles.

Fig. 10 is a perspective view showing a still further mode of the small bundle fixing member 4bi shown in Fig. 8. In Fig. 10, the small bundle fixing member 4bk is a circular cylinder, but the bottom face is semi-spherical. The small bundle fixing member 4bk further has turbulence generating members 4bt provided partially on the circumferential surface of the circular cylinder. The turbulence generating members 4bt can be blades, spiral grooves, etc. formed on the surface of the small bundle fixing member 4bk. The module having small bundle fixing members provided with turbulence generating members can be preferably used in the case where raw water containing much suspended matter is filtered. The reason is that raw water and air collide with the turbulence generating members, to finely vibrate and shake the small bundles.

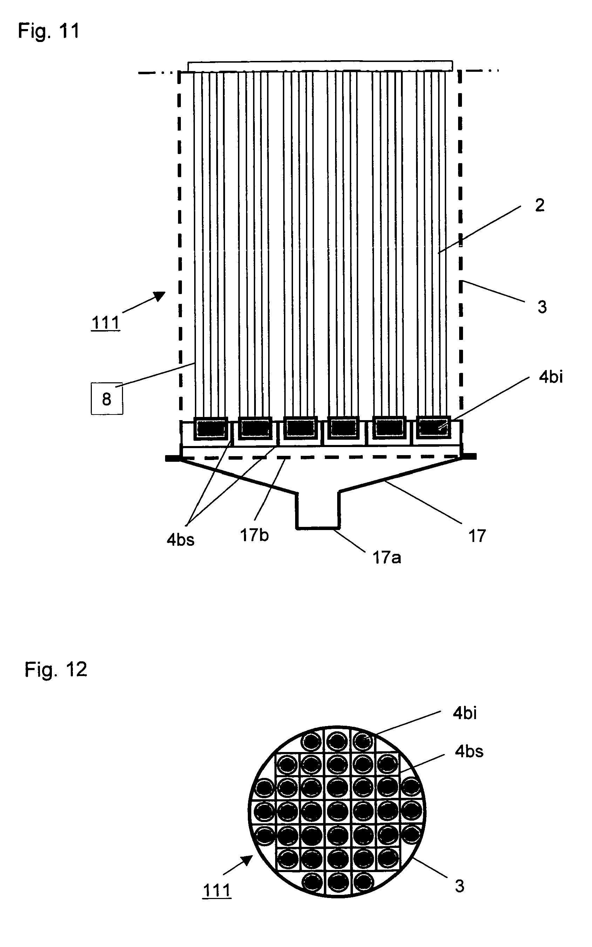

Fig. 11 is a schematic vertical sectional view showing the lower portion of another mode of the hollow fiber membrane module 1 of the invention shown in Fig. 1. The difference between the module 111 of Fig. 11 and the module 1 of Fig. 1 is that small bundle partition members 4bs are installed between the respective small bundles 8 in the module 111 of Fig. 11. Further, in the module 111 of Fig. 11, a bottom cap 17 having an air inflow port 17a is installed instead of the air introducing cylinder 7 of the module 1 of Fig. 1. The bottom cap 17 is liquid-tightly bonded to the bottom end of the cylindrical case 3. In the bottom cap 17, an air diffusion plate 17b is installed in opposite to the bottom end face of the cylindrical case 3. Since the module 111 of Fig. 11 is identical with the module 1 of Fig. 1 in the other structure, identical parts are given the same symbols.

Fig. 12 is a plan view showing the partition members 4bs in the module 111 of Fig. 11. The partition members 4bs are formed by lengthwise and crosswise partition sheets installed like a lattice in the cylindrical case 3. In each of the spaces partitioned by the partition sheets, each small bundle fixing member 4bi is positioned. If the partition members 4bs are installed, the positions of the respective small bundles can be gently regulated. This enhances the dispersibility of raw water and air. The enhanced dispersibility further enhances the effect of preventing the occurrences of contamination spots in the hollow fiber membranes and the effect of preventing the intertwining between the respective small bundles. The material of the partition members 4bs is not especially limited, but considering the bonding and future dumping of partition members 4bs, it is preferred that the partition members 4bs are made of the same material as that of the cylindrical case.

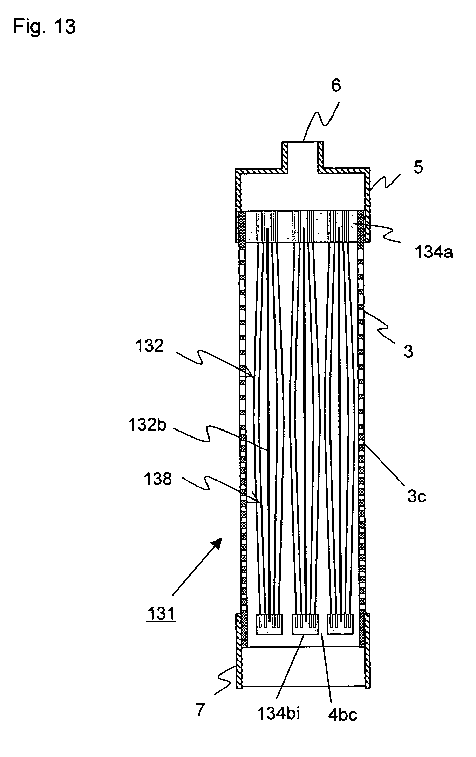

Fig. 13 is a schematic vertical sectional view showing a further mode of the hollow fiber membrane module 1 of the invention shown in Fig. 1. A large difference between the module 131 of Fig. 13 and the module 1 of Fig. 1 is that at least one hanging string 132b is provided along the hollow fiber membranes forming each small bundle. In this regard, the module 131 of Fig. 13 can be said to be an improved version of the module 1 of Fig. 1. Since the module 131 of Fig. 13 is identical with the module 1 of Fig. 1 in the other structure, identical parts are given the same symbols.

In the case of the module 1 of Fig. 1, if a hollow fiber membrane shorter in the length between the bottom surface of the hollow fiber membrane fixing member 4a and the top surface of the small bundle fixing member 4bi, namely, in the length in the filtration region than the other hollow fiber membranes exists among the multiple hollow fiber membranes 2 forming each small bundle 8, the hollow fiber membrane shorter in the length is destined to bear the weight of the small bundle fixing member 4bi more than the other hollow fiber membranes or to bear all the weight of the small bundle fixing member 4bi.

This situation threatens to cut the hollow fiber membrane shorter in the length, and the cutting may be followed by the cutting of other short hollow fiber membranes. If a hollow fiber membrane is cut, there is a problem that the raw water passes through the cut hollow fiber membrane to flow into the filtrate. On the other hand, it is not easy to produce a hollow fiber membrane module while assuring that all the lengths of tens to thousands of hollow fiber membranes forming one small bundle in the filtration region become equal to each other.

To solve the problem, in the module 131 of Fig. 13, at least one hanging string 132b is provided along the hollow fiber membranes 132 forming each small bundle 138. One end of the hanging string 132b is fixed to the hollow fiber membrane fixing member 134a fixed to the cylindrical case 3 together with the ends on one side of the hollow fiber membranes 132, and the other end is fixed to the small bundle fixing member 134bi together with the hollow fiber membranes 132 of the small bundle 138. The length of the hanging string 132b fixed at both the ends between the bottom surface of the hollow fiber membrane fixing member 134a and the top surface of the small bundle fixing member 134bi, namely, the length in the filtration region is set to be shorter than the length of the hollow fiber membrane shortest in the filtration region. Meanwhile, the lengths of the hollow fiber membranes 132 and the length of the hanging string 132b refer to the lengths of respectively straight hollow fiber membranes and hanging string.

If the hanging string 132b exists, the loads born by the hollow fiber membranes shorter in length can be reduced or can be perfectly eliminated, and the cutting of hollow fiber membranes by overloads can be prevented. As a matter of course, for this purpose, the durability of the suspended linear article 132b against loads must be larger than that of hollow fiber membranes.

The hanging string 132b is formed, for example, of a yarn or rod. Examples of the yarn include a metallic wire, natural or synthetic resin fibers, or metallic or resin tube, and examples of the rod include a metallic rod, natural or synthetic resin rod, or metallic or resin tube. Examples of the resin include polyethylene resin, polypropylene resin, vinyl chloride resin, acrylic resin, etc. Examples of the metal include stainless steel, aluminum, etc. In the case where a hanging string 132b is a tube, it is desirable that the end faces of the tube is sealed for preventing that raw water flows toward the filtrate side when the tube should be damaged. It is preferred that two or more hanging strings 132b are provided for each small bundle 138. The reason is that even in the case where one hanging string should come off from the hollow fiber membrane fixing member 134a or the small bundle fixing member 134bi, the other hanging string can effectively prevent the cutting of hollow fiber membranes.

### Example 1

A filtrate pipe was connected with the filtrate outlet 6 of the hollow fiber membrane module 1 shown in Fig. 1, and the hollow fiber membrane module 1 was immersed in a water tank filled with raw water, with the filtrate outlet 6 kept above. A pump was used for sucking from the side of the water collection cap 5, to filter the raw water of the water tank.

The hollow fiber membranes 2 used in the hollow fiber membrane module 1 were polyvinylidene fluoride porous hollow fiber membranes having an outer diameter of 0.9 mm and a length of about 1000 mm. The number of the hollow fiber membranes 2 installed in the cylindrical case 3 was about 10000. The cylindrical case 3 was made of polyethylene and had an inner diameter of about 135 mm and a length of about 1000 mm. The average hole area rate of the circumferential wall of the cylindrical case 3 was 25% in the lower portion (region B) and 37.5% in the upper portion (region A). The form of the open portions 9 was a square (3 mm x 3 mm) in the lower portion (region B) and a rectangle (3 mm x 9 mm) in the upper portion (region A). The thickness of the wires used for the meshed sheet forming the open portions 9 was 3 mm respectively in the regions A and B. The hollow fiber membrane fixing member 4a and the small bundle fixing members 4bi were respectively made of urethane resin. The small bundle fixing members 4bi were circular cylinders and respectively had about 1400 hollow fiber membranes 2 bundled. The end faces of the respective hollow fiber membranes 2 were plugged with the urethane resin. The number of small bundles (small bundle fixing members 4bi) was 7.

Then, as the raw water, the lake water of Lake Biwa having a turbidity of 3 to 5 was sucked by a pump from the side of the water collection cap 5 for 30 minutes, to produce 0.5 m³/m²/day of a filtrate, and subsequently 1 m³/m²/day of the filtrate was used for backwashing for 1 minute. Further, in the air scrubbing process, 100 L/min of compressed air was blown into the hollow fiber membrane module 1 through the air introducing cylinder 7 for one minute. Whenever the filtration, backwashing and air scrubbing were repeated several times, the raw water in the water tank was discharged once. This operation was performed continuously for about one week, and as a result, the differential pressure of the hollow fiber membranes 2 did not rise.

### Comparative Example 1

The same hollow fiber membrane module as that of Example 1 was used to filter raw water similarly for one week, except that the average hole area rate of the circumferential wall of the cylindrical case 3 was 30% in the entire surface of the circumferential wall. As a result, the differential pressure of the hollow fiber membranes rose at a rate of 1 kPa/day.

### Example 2

The hollow fiber membrane module 131 shown in Fig. 13 was used to filter raw water.

The hollow fiber membranes 132 used were about 3000 polyvinylidene fluoride porous hollow fiber membranes having an outer diameter of 1.5 mm, an inner diameter of 0.9 mm and a length of about 1000 mm. The cylindrical case used was the cylindrical case 3 shown in Fig. 1. The cylindrical case 3 was made of ABS and had an inner diameter of about 130 mm and a length of about 1000 mm. The average hole area rate of the circumferential wall of the cylindrical case 3 was the same as that of Example 1. The hollow fiber membrane fixing member 134a and the small bundle fixing members 134bi were respectively made of urethane resin. The small bundle fixing members 134bi were circular cylinders and respectively had 420 to 430 hollow fiber membranes 132 bundled and plugged at their end faces.

As the hanging strings 132b, stainless steel wires having a diameter of 0.5 mm were used, and in each small bundle 138, the lengths of the hollow fiber membranes shortest in the filtration region (lengths of straight hollow fiber membranes) were 998 mm to 1001 mm, but the lengths of the stainless steel wires excluding the hollow fiber membrane fixing member 134a and the small bundle fixing members 134bi (lengths in the filtration region) (lengths of straight stainless steel wires) were 988 mm to 990 mm.

As the raw water, lake water of Lake Biwa having a turbidity of 3 to 5 was sucked by a pump from the side of the water collection cap 5 for 30 minutes, to produce 0.5 m³/m²/day of a filtrate, and subsequently 1 m³/m²/day of the filtrate was used for backwashing for 1 minute. Further, in the air scrubbing process, 100 L/min of compressed air was blown into the hollow fiber membrane module 131 through the air introducing cylinder 7 for one minute. Whenever the filtration, backwashing and air scrubbing were repeated several times, the raw water in the water tank was discharged once.

As a result, even after lapse of 12 months, the rupture of the hollow fiber membranes could not be confirmed in a membrane rupture test.

### Comparative Example 2

The same hollow fiber membrane module as that of Example 2 was used to similarly filter raw water, except that the hanging strings were not provided in the respective small bundles. As a result, in a membrane rupture test of about 6 months later, one hollow fiber membrane was found to be cut, and the hollow fiber membrane was plugged with a resin.

### Industrial applicability

According to the hollow fiber membrane module of the invention, the compressed air supplied for air scrubbing from below the hollow fiber membrane module can be effectively used for air-scrubbing the hollow fiber membranes, and the suspended matter can be effectively discharged from both the top and bottom ends of the hollow fiber membrane module. The hollow fiber membrane module of the invention can be used for a long period of time, since the filtration capability of the hollow fiber membranes does not decline for a long period of time.

## Claims

1. A hollow fiber membrane module comprising a cylindrical case having openings at the top end and bottom end thereof, a hollow fiber membrane bundle comprising numerous hollow fiber membranes positioned in the vertical direction in the cylindrical case, a hollow fiber membrane fixing member installed at the top end portions of the hollow fiber membranes for fixing the hollow fiber membranes in such a state that the hollow portions of the hollow fiber membranes are kept open, and a hollow fiber membrane plugging member installed at the bottom end portions of the hollow fiber membranes for plugging the hollow portions of the hollow fiber membranes, wherein the hollow fiber membrane fixing member is fixed to the cylindrical case in such a state that the hollow fiber membrane fixing member closes the opening at the top end of the cylindrical case, and wherein the circumferential wall of the cylindrical case is at least partially formed of a perforated member and that the average hole area rate of the circumferential wall in the lower portion of the cylindrical case is 25% or less.

2. A hollow fiber membrane module according to claim 1, wherein the average hole area rate of the circumferential wall in the upper portion of the cylindrical case is larger than the average hole area rate of the circumferential wall in the lower portion.

3. A hollow fiber membrane module according to claim 1, wherein the numerous hollow fiber membranes are divided into a plurality of small bundles each of which comprises a plurality of the hollow fiber membranes, and that the hollow fiber membrane plugging member comprises small bundle fixing members independent from each other with clearances between the respective small bundle fixing members, for plugging the hollow portions of the respective hollow fiber membranes and for bundling and integrally fixing the respective hollow fiber membranes as each of the respective small bundles.

4. A hollow fiber membrane module according to claim 3, wherein the number of the small bundles is 3 to 50, and the number of hollow fiber membranes in each of the small bundles is 50 to 2000.

5. A hollow fiber membrane module according to claim 4, wherein the cylindrical case has a diameter of 50 to 400 mm and a length of 500 to 3000 mm.

6. A hollow fiber membrane module according to claim 3, wherein each of the small bundle fixing members has a turbulence generating member on a surface thereof.

7. A hollow fiber membrane module according to claim 3, wherein small bundle partition members for compartmentalizing the respective small bundle fixing members are provided between the respective small bundle fixing members.

8. A hollow fiber membrane module according to claim 3, wherein at least one hanging string is provided along the hollow fiber membranes forming each of the small bundles; one end of the hanging string is fixed to the hollow fiber membrane fixing member while the other end is fixed to the small bundle fixing member; in each of the small bundles, the length of the hanging string in a filtration region of the hollow fiber membranes is shorter than the shortest one of the lengths of the plurality of the hollow fiber membranes in the filtration region.
